Europäisches Patentamt

European Patent Office

Office européen des brevets

(11) Publication number: **0 410 340 A2**

# EUROPEAN PATENT APPLICATION

(21) Application number: 90114060.8

(22) Date of filing: 23.07.90

(51) Int. Cl.5: **H01J 49/04**, G01N 30/72

(30) Priority: 28.07.89 IT 2135689

(43) Date of publication of application:
**30.01.91 Bulletin 91/05**

(84) Designated Contracting States:
**DE FR GB NL**

(71) Applicant: **CARLO ERBA STRUMENTAZIONE S.p.A.**
**Casella Postale Aperta**
**I-20090 Rodano Milano(IT)**

(72) Inventor: **Ramsey, Edward**
**Via Corridoni 20**
**I-20063 Cernusco sul Naviglio, Milano(IT)**
Inventor: **Sisti, Giorgio**
**P.za S. Agostino 7**
**I-20123 Milano(IT)**

(74) Representative: **Marietti, Giuseppe**
**CENTRO DI CONSULENZA IN PROPRIETA'**
**INDUSTRIALE Viale Caldara, 38**
**I-20122 Milano(IT)**

(54) Method and apparatus for interfacing a chromatographic equipment with a mass spectrometer.

(57) An interface for coupling chromatographic equipment with a mass-spectrometer comprises of an electric arc discharge means for locally heating the column end to vaporize or keep in a vaporized condition the sample eluting from said column.

Fig.1

EP 0 410 340 A2

This invention relates to the interfacing of chromatographic equipment with a mass spectrometer.

More particularly, this invention relates to an improved method and apparatus for interfacing a chromatographic equipment and a mass spectrometer.

Even more specifically, this invention relates to a method and a related apparatus for coupling a supercritical fluid chromatography (SFC) column with mass spectrometry (MS) equipment.

Coupling of a chromatographic analyzing equipment to a mass spectrometer is a well known technique.

Combined gas chromatography-mass spectrometry (GC-MS) and high performance liquid chromatography-mass spectrometry (HPLC-MS) have been known in the art for many years and have become widely used because of the advantages that mass spectrometry provides both in qualitative and quantitative analyses.

More recently in order to obtain similar benefits also for supercritical fluid chromatography (SFC), the necessity has risen for interfacing this chromatographic technique with mass spectrometry.

Actually, because of the nature of SFC, interfacing is not as easy as in GC-MS. More particulary, the main difficulties come from the requirement of mantaining supercritical fluid conditions in the interface while avoiding at the same time the "deposition", or precipitation of the compounds eluting from the column outlet.

In fact SFC, as HPLC, does not require vaporization of the sample for its separation through the column, and is mainly used for studying involatile compounds, not amenable to GC analysis. The compounds once introduced into the mobile phase are solvated and their resultant solution is directed to a column where separation of the mixture components is accomplished. In order to achieve supercritical conditions during the separation it is necessary to maintain the column at or above the supercritical temperature of each individual mobile phase and also place a form of restriction at the column end such that the supercritical pressure of each individual mobile phase is reached or exceeded. Various forms of restrictor can be used to limit the flow rate at the column outlet and thus provide a method by which the pressure within the column can be regulated.

One form of restrictor involves the attachment of an appropiate length of narrow bore tubing of uniform internal diameter, at the column outlet. Another form of restrictor involves the attachment, at the column outlet, of a length of tubing whose terminus or section prior to the terminus has been tapered to produce a narrow orifice. Alternatively, with this later approach, the end of a fused silica capillary column can itself be tapered to provide the restriction. Yet another form of restrictor involves the connection into the column outlet of a tube within which a permeable material (e.g.sintered glass) has been deposited to provide the point of restriction.

At the point of restriction a sudden decompression of the supercritical fluid mobile phase occurs, which is then entirely or almost entirely vaporized: such decompression dramatically changes the solvating properties of said fluid. This change occurs so dramatically because the fluid abruptly passes from a region of relatively high pressure on the inlet side of the restrictor under which the supercritical phase exists and then rapidly expands into the gas or vapour phase on the outlet side of the restrictor which is situated in a region of relatively low pressure. This rapid phase change is accompanied by a localized region of cooling due to the Joule - Thompson effect. Thus, the sample eluting from the column restrictor arrangement, being no longer sufficiently solvated by the evaporated mobile phase and subjected to rapid cooling, may precipitate and return to a solid condition.

In the specific case of a supercritical fluid chromatograph coupled to a mass spectrometer the supercritical fluid may be permitted to expand into an evacuated region of the mass spectrometer, prior to ionization and subsequent mass analysis, thereby promoting the dramatic nature of the phase charge and cooling effect previously descibed.

In order to transport said sample from the column end to the ion source of the mass spectrometer, two main methods have been utilized.

According to the first method, a moving belt interface is used. This device (patented by Finnigan MAT, U.S.A.) is used for both liquid cromatography (LC)-MS and SFC-MS interfacing, and physically transports on the belt the sample from a heated deposition point near the column end to the ion source. The main disadvantages of this method are that the relating equipment is very expensive, and it is best suited for relatively large quantities of samples/eluent.

In the second method, which is used for capillary SFC-MS coupling, the sample is vaporized by heating the column end or the restrictor area by means of an electric resistor. A disadvantage of this method is that a high degree of mechanical accuracy is required to ensure adequate thermal contact between the electric resistor heating element and the column outlet restrictor. Another disadvantage of this method is that the electric resistor heating element must be positioned such that under ideal circumstances only the actual zone of decompression is heated. In practice, due to nonideal positioning of the electric resistor heating element, the mobile phase prior to reaching the decompression zone becomes prematurely heated, thereby altering its physical and solvating properties, which in severe cases can lead to either complete or partial precipitation of the solutes prior to reaching the more strongly heated decompression zone.

Therefore, in the case of the moving belt interface supercritical conditions are not maintained within the interface since the sample must first be deposited onto the belt, and with the electric resistor heating of the column outlet restrictor difficulties may arise in accurately maintaining supercritical fluid conditions to the decompression zone.

Similar problems arise, less dramatically, also in an LC-MS interface, where a heated transfer tube is required in order to vaporize the liquid sample and enable it to reach the ionization chamber of the mass spectometer.

Accordingly, there remains at present a need for a method for interfacing a chromatographic equipment with a mass spectrometer which maintains unchanged the fluid mobile phase conditions upstream of the columm end while vaporizing the sample eluting from said column end.

This invention seeks to provide a method and an apparatus for interfacing a chromatographic equipment (particularly for SFC) with a mass spectrometer by selectively heating the sample eluting from the column end without altering the mobile phase conditions upstream said column end. According to one aspect, the invention provides a method for interfacing a chromatographic equipment with a mass spectrometer, of the kind in which the sample eluting from the column end is heated to be vaporized or to be kept in a vaporized condition, characterized in that said sample is heated by means of an electric arc discharge.

According to a second aspect, the invention provides an apparatus for interfacing a chromatographic equipment with a mass spectrometer, of the kind in which heating means are provided for vaporizing or keeping in a vaporized condition a sample eluting from the column end characterized in that said heating means are comprising of an electric arc discharge means.

The invention will now be described in more detail, with reference to the enclosed illustrative and non limiting drawings, in which:

- fig. 1 is a schematic cross-sectional view of an embodiment according to the invention;
- fig. 2 is a cross-sectional view of fig. 1 embodiment provided with a duct for a makeup gas;
- fig. 3 is a cross-sectional view of an alternative embodiment; and
- figures 4-6 are schematic cross section views of three other embodiments of the present invention.

The invention is hereinafter described by way of an example concerning a SFC-MS interface, but it will be understood that the apparatus according to the invention can be utilized also for coupling LC-MS or GC-MS or HPLC-MS.

Also, it will be understood that the term "column end" defines not only the actual extremity of the chromatographic column as in LC, HPLC and GC equipments, but also the end portion of any additional duct such as transfer tubes in LC, and the restrictor or the restriction area in SFC equipments.

According to the invention, the heating of the eluted sample is carried out by means of an electric discharge obtained by an electric arc.

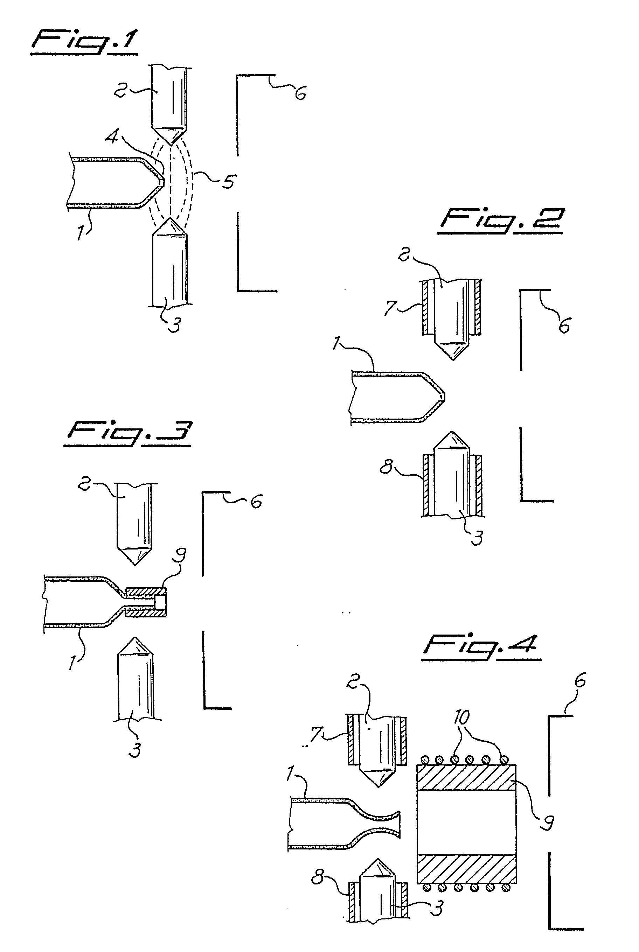

As shown in fig. 1, where the end portion of an SFC column 1 tapered to form the restrictor is shown , the two electrodes 2,3, forming the electric arc discharge means, are positioned at the end of column 1, in correspondence to the restriction area 4, i.e. where the sudden decompression of the mobile phase occurs. In order to simplify the drawings, in most of the figures the column end is represented by this type of restrictor, but it will be understood that any of the previously described restrictors can be used in this configuration.

The discharge, which is schematically shown with the dotted lines 5, vaporizes the sample eluting from the column end , or restrictor, 4, avoiding its condensation and precipitation. The vaporized sample is then forwarded to the ion source 6 of the mass spectrometer for its ionisation and subsequent analysis.

The main advantage of heating the column end with an electric discharge is that said discharge has a "point effect", that is, the heating is localized on the column end, or restriction/decompression area, and the supercritical fluid conditions of the mobile phase are not altered upstream, in the column, as it occurs with prior art techniques.

The discharge may be effected either at atmospheric pressure, or at a pressure lower or higher than atmospheric.

If the discharge is effected in the high vacuum environment typical of a mass spectrometer, the environment gas resulting from the cited decompression of the mobile phase may have a pressure too low to give a local density sufficient for the discharge. In this case an additional or "makeup" gas can be locally fed in the area between the electrodes to this purpose.

Fig. 2 shows an embodiment of the invention where this makeup gas is fed to the electrode area by means of two feeding ducts 7, 8, coaxial with the electrodes 2,3, respectively. Quite obviously any other kind of feeding duct can be used, e.g. a single duct perpendicularly positioned to the column 1.

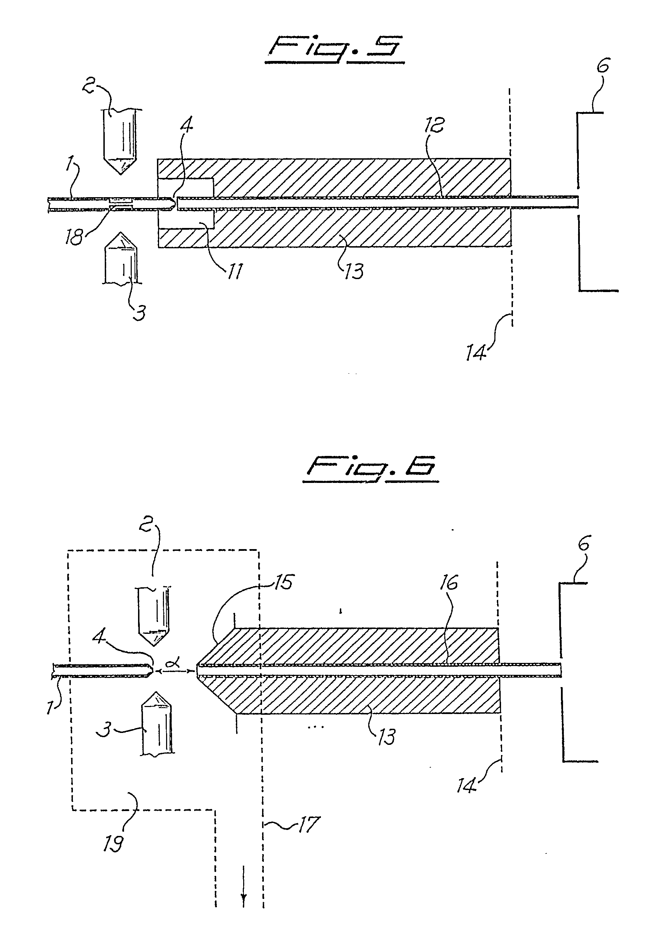

The heating temperature of the sample can be controlled by modifying the discharge density, and for better controlling of said temperature, fig. 3 embodiment can be used, where a metal jacket 9 encases the column end of column 1, downstream of the restriction. A thermocouple (not shown) is positioned inside the metal jacket 9 or between said jacket and the column 1, thereby monitoring more precisely the column outlet or column restrictor temperature.

In fig. 4 a third version of the embodiment according to the invention is shown. In this embodiment a duct 9′ is positioned between the column end and the ion source 6; said duct (usually a metal duct) is heated by a resistance wire 10 in order to keep the sample in a vaporized condition during its passage to the ion source; temperature controlling means are provided to control the heating of said duct 9′. Duct 9′ thus acts as a "desolvation" region, where the vaporized sample is eventually desolvated from the mobile phase fluid.

In fig. 5 a further version of the embodiment according to the invention is shown, where the electric discharge is performed under atmospheric conditions, the sample is then transferred to an evacuated region of the mass spectrometer. In this embodiment the sample is vaporized within the column end, i.e. in correspondence to the restrictor 18 which in fig.5 embodiment is of the linear type, but may also be of the tapered or sintered type. The column end 4′ which is immediately downwards restriction 18, is connected to a heated transfer tube 12 by means of a low volume coupling 11 which is itself heated along with the transfer tube 12 by means of a heating element 13, e.g. a resistance wire.

The end of the transfer tube 12 discharges into the ion source 6, i.e. in the high vacuum region of the mass spectrometer schematically shown on the right'side of the hatched line 14.The low dead volume coupling 11 is sufficiently gas tight to maintain the high vacuum requirements for the correct functioning of the mass spectrometer.

Again a metal jacket containing a thermocouple can be used to measure the degree of heating generated by the electric discharge.

In fig. 6 embodiment, the electric discharge is performed under partial vacuum conditions in a region 19 external to the ion source of the mass spectrometer,schematically defined by hatched line 17 and connected to a reduced pressure source, not shown.

The sample is vaporized via the electric discharge and after leaving the column end and passing a predetermined length of the partial vacuum region 19,is sampled into the mass spectrometer ion source via a heated transfer tube 16 similar to tube 12 of figs.5. This tube 12, also, is under high vacuum conditions and is provided with a heating element 13. Since the discharge is performed under partial vacuum conditions, an option is available to provide a discharge gas via a makeup duct as previously disclosed with reference to figures 2 and 4.

In both high vacuum and partial vacuum conditions, the sample heating temperature can be controlled by controlling the discharge density.

With this embodiment sample enrichment relative to the mobile phase vapour can be acheived, since the solute molecules have a larger molecular momentum and can reach the sampling orifice 15 of the heated transfer tube 16 without being influenced by the suction used to generate the partial vacuum. The relatively light molecules and/or atoms of the mobile phase have less forward momentum and become influenced by the suction used to generate the partial vacuum such that their trajectories are deviated to avoid them reaching the sample orifice 15 and being sampled into the high vacuum region of the mass spectrometer. Optimum controlling of the sample enrichment may thus be obtained by varying the degree of the vacuum, the flow rate of cited makeup gas and by varying the length between the end portion of column 1 and the sampling orifice 15, according to the mobile phase characteristics.

## Claims

1. A method for interfacing a chromatographic equipment with a mass spectrometer, of the kind in which the sample eluting from the column end is heated to be vaporized or to be kept in a vaporized condition, characterized in that said sample is heated by means of an electric arc discharge (5).

2. A method according to claim 1, characterized in that vaporized sample is fed to the ionization source (6) through a heated duct or transfer tube (9′, 12, 16).

3. A method according to claim 1 or 2, characterized in that said discharge (5) is carried out in a high vacuum region of the mass spectrometer through a gas derived from the mobile phase used in the chromatographic separation of said sample and/or comprising a makeup gas locally fed (7, 8) at the electrode area.

4. A method according to claim 2, characterized in that said discharge (5) is carried out under atmospheric conditions and the vaporized sample is fed to said transfer tube (12) through a gas-tight low volume coupling (11), said transfer tube or heated duct (12) being under high vacuum conditions.

5. A method according to claim 2, characterized in that said discharge is carried out in a partial vacuum region (19) and in that the vaporized sample eluting from the column end (4) is fed to the ionization source (6) through a length (α) of said partial vacuum region and through said heated duct or transfer tube (16).

6. A method according to claim 5, characterized in that said length (α) between the end portion of the chromatographic column (1) and the inlet orifice (15) of said heated duct (16) is varied to control sample enrichment.

7. A method according to claim 5 or 6, characterized in that a makeup gas is fed to the electrode area.

8. A method according to any preceding claim, characterized in that the heating temperature of said sample is controlled by controlling the discharge density.

9. A method according to any preceding claim, characterized in that said chromatographic equipment is a supercritical fluid chromatographic equipment and said discharge heats the decompression and/or restriction area (4) of said chromatographic column (1).

10. An apparatus for interfacing a chromatographic equipment with a mass spectrometer, of the kind in which heating means are provided for vaporizing or keeping in a vaporized condition a sample eluting from the column end (4) of said chromatographic equipment, characterized in that said heating means are comprising electric arc discharge means (2, 3).

11. An apparatus according claim 10, characterized in that it comprises a heatable duct or transfer tube (9′, 12, 16) positioned between said column end (4) and the ion source (6) of the mass spectrometer for transferring the vaporized sample to the ion source (6) of said mass spectrometer.

12. An apparatus according to claim 10 or claim 11 characterized in that said discharge means (2, 3) are positioned in a high vacuum region of said mass spectrometer.

13. An apparatus according to claim 11, characterized in that said discharge means (2, 3) are positioned in an atmospheric pressure region, and in that said end of column (4′) is connected to said heated duct (12) for transferring of the vaporized sample to ion source (6) of said mass spectrometer, said heated transfer duct (12) being under high vacuum conditions.

14. An apparatus according to claim 11, characterized in that said discharge means are positioned in a partial vacuum region (19) and said transfer tube (16) is positioned substantially aligned with and at a predetermined length (α) from the actual extremity of said chromatographic column (1).

15. An apparatus according to claim 14, characterized in that means are provided to control sample enrichment by varying said length (α) between the actual extremity of said chromatographic column (1) and the inlet orifice (15) of said transfer tube (16).

16. An apparatus according to claim 12 or to claims 14 or 15, characterized in that feeding means (7, 8) are provided to locally feed a makeup gas to the electrode area of said discharge means (2, 3).

17. An apparatus according to any claim from 10 to 16 characterized in that it comprises means to control the discharge density to therefore control the heating temperature.

18. An apparatus according to any claim from 10 to 17 characterized in that a metal jacket (9) is provided around at least a portion of said column end (4) to be directly heated by said discharge means (2, 3), said metal jacket (9) housing at least one thermocouple for taking the jacket temperature. 19. An apparatus according to any claim from 10 to 18, characterized in that said chromatographic equipment is an SFC equipment and said discharge means (2, 3) are positioned to heat the decompression and/or restriction area of the chromatographic column (1).

Fig.1

Fig.2

Fig.3

Fig.4

# _Fig.5_

# _Fig.6_